Europäisches Patentamt

(19) European Patent Office (11) Publication number: **0 056 052**

Office européen des brevets **B1**

(12) **EUROPEAN PATENT SPECIFICATION**

(45) Date of publication of patent specification: **11.03.87** (51) Int. Cl.⁴: **H 04 N 5/06**

(21) Application number: **81902142.9**

(22) Date of filing: **15.07.81**

(86) International application number:
**PCT/US81/00958**

(87) International publication number:
**WO 82/00394 04.02.82 Gazette 82/04**

(54) **SYNCHRONIZING CIRCUIT ADAPTABLE FOR VARIOUS TV STANDARDS.**

(30) Priority: **17.07.80 US 169680**
**24.06.81 US 277018**

(43) Date of publication of application:
**21.07.82 Bulletin 82/29**

(45) Publication of the grant of the patent:
**11.03.87 Bulletin 87/11**

(84) Designated Contracting States:
**DE FR GB**

(56) References cited:
**DE-A-2 746 642**
**US-A-4 007 486**
**US-A-4 169 659**
**US-A-4 246 609**
**US-A-4 268 851**
**US-A-4 280 138**

(73) Proprietor: **RCA CORPORATION**
**201 Washington Road**
**Princeton, NJ 08540 (US)**

(72) Inventor: **SMITH, Terrence Raymond**
**7-B Adams Drive**
**Mapleshade, NJ 08052 (US)**
Inventor: **MARLOWE, Frank Jerome**
**20 Academy Street**
**Kingston, NJ 08528 (US)**

(74) Representative: **Smith, Thomas Ian Macdonald et al**
**RCA International Limited Norfolk House**
**(1st Floor) 31 St. James Square**
**London SW1Y 4JR (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to synchronizing arrangements for generating synchronizing and blanking signals, which arrangement is readily adaptable for various television standards.

There are four main television standards in use throughout the world; NTSC, SECAM, PAL and PAL-M. Making receivers for each one of these various standards poses no problem, since there is sufficient manufacturing volume to economically justify this specialization.

Studio apparatus using sync generators, such as for example cameras, is however, a different situation. It is difficult to justify making a sync generator for just one standard due to the low volume involved. One solution is shown in U.S. Patent Number 4,169,659, which shows a sync generator that is adaptable to different standards. However, a cost penalty is then incurred on every unit because each unit must include portions applicable only to other standards, even though they may never be used. Further, once built, the adaptable unit cannot be readily changed to produce different pulses as may be required, e.g., a pulse occurring at the 19th horizontal line to control insertion of a vertical interval test signal when the unit was designed to produce a pulse on the 21st horizontal line. Another problem is that the circuit cannot be changed without complete redesign of hardware to generate a new standard as this may become necessary. For example, one standard that is sometimes used has 24 frames per second to match that of film, and 655 lines per frame, which standard has the same bandwidth as that of NTSC.

A synchronizing pulse generator that is more readily adaptable, in the field, for use according to different television standards, is disclosed in DE2746642, in which two addressable memories addressed according to successive counting states of respective line (horizontal) and field (vertical) counters, provide from their respective addresses signals corresponding to required synchronization components at successive instants during and between successive lines and fields. The different synchronization standards required by different television standards can be satisfied by appropriate programming of the memories. However, that prior system is not self-contained, in that its counters are periodically reset from external sources of line (horizontal) and field (vertical) synchronization signals, and that, because only synchronization signal components of the required composite signals are generated, with no ability, for instance, to provide the different types of composite synchronization signal required at different times within a field interval, external gating is required to create the required composite synchronization signals from the synchronization signal components provided from the memories.

According to the present invention, a self-contained arrangement of counter-driven memories is provided which can directly provide the required composite synchronization signals without requiring additional externally controlled gating circuitry and without requiring external synchronizing sources which must also be adapted according to the particular television standard for which the system is to be used. To this end, the system of the present invention is characterized in that the counters are connected in cascade (that is, the field counter is driven by a signal derived from the line counter at a rate related to the line frequency), each counter is reset on reaching a particular count, by a signal provided from the then addressed location of the corresponding memory, and the line memory is addressed not only by signals from the horizontal counter, but also by signals obtained from the field memory dependent on the currently addressed field memory location.

In the accompanying drawings:

Figure 1 is a drawing of an NTSC composite video signal in the area of the vertical blanking interval;

Figure 2 is a block diagram of an embodiment of the invention;

Figure 3 is a detailed block diagram of another embodiment of the invention;

Figure 4 is a timing diagram of vertical rate signals present in Figure 3;

Figure 5 is a timing diagram of horizontal rate signals present in Figure 3;

Figures 6 and 7 are pulse timing diagrams useful in understanding the memory reduction aspect of the invention;

Figure 8 is a simplified block diagram of the reduced memory embodiment of the invention; and

Figure 9 is a detailed block diagram of the Figure 8 embodiment.

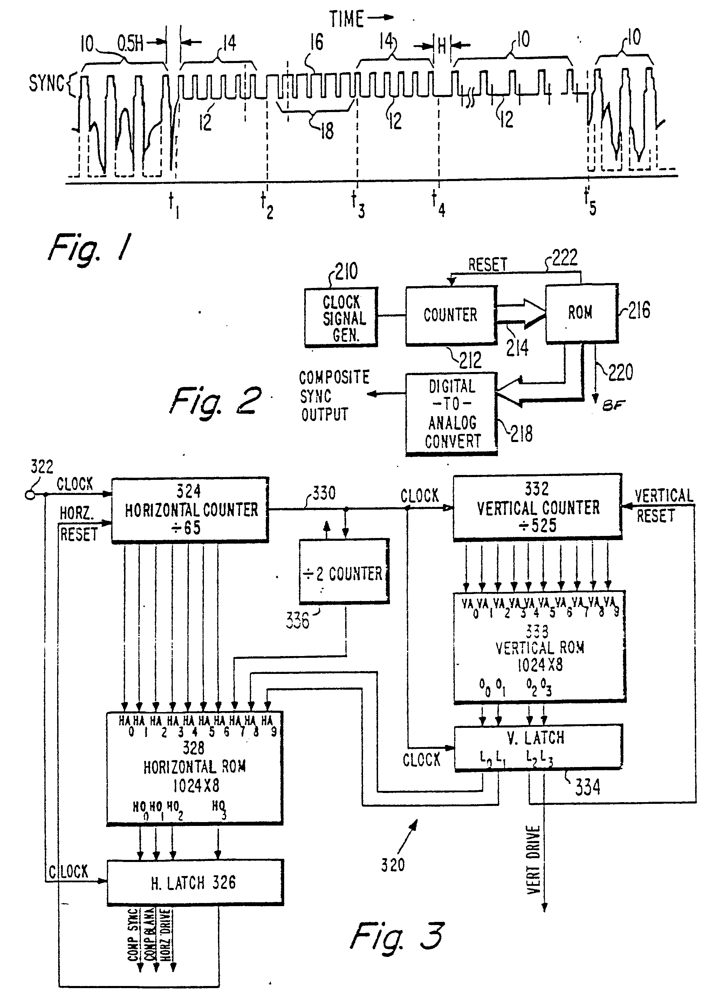

Figure 1 illustrates an NTSC composite video signal in the region about the vertical blanking interval of one television field. Positive-going pulses 10 are the horizontal synchronizing pulses occurring before time t1 near the bottom of the raster. During the next time interval t1—t2, the composite signal comprises the superposition of the vertical blanking pulse 12 and six equalizing pulses 14. In the next interval t2—t3, the composite signal comprises the superposition of the vertical blanking signal 12 and a vertical sync signal 16 serrated by negative-going equalizing pulses 18. During the next interval t3—t4, the composite signal comprises the superposition of the vertical blanking signal 12 with further equalizing pulses 14. The composite signal in interval t3—t4 is identical to that in the interval t1—t2. The composite signal during the next following interval t4—t5 comprises the sum of the vertical blanking signal 12 and horizontal sync pulses 10. Interval t4—t5 has a duration established by the number of horizontal lines selected in accordance with the desired application within the television synchronizing standard being used. In the time following time t5 and extending until the next following time t1 of the beginning of the next following blanking signal, the composite signal is as described above for the time preceding time t1.

The composite sync for the second NTSC field is identical except for certain half-line time shifts.

Figure 2 illustrates in simplified block diagram form a television composite synchronizing and blanking signal generator according to the invention. In Figure 2, is shown a clock signal generator 210. A counter 212 is coupled to generator 210 for counting clock pulses and provides a decoded output signal on parallel output lines illustrated as a broad arrow 214. The decoded signal uniquely represents each state of the counter 212 as it counts clock pulses. A digital read-only memory (ROM) 216 is addressed by the signals on lines 214. Thus, each unique state of counter 212 addresses a single memory location in ROM 216. Each memory location of ROM 216 has sufficient bit storage capacity for the number of levels required to synthesize the instantaneous amplitude of the desired waveform. With 8 bits, a signal having 256 levels can be synthesized. To synthesize the waveform of Figure 1, three levels are required; white, blanking and sync levels, which requires a storage capacity of 2 bits. The two bits representing the three levels are provided by ROM 216 to a D-to-A converter 218 to sequentially generate at the clock rate the desired 3-level analog output signals.

In the event that the sync standard being used requires a count of clock pulses less than the maximum count of which counter 212 is capable, the counter may be reset at the proper count (representing the number of clock pulses in one field or one frame, as required). The reset is accomplished by a pulse generated by ROM 216 and applied over a conductor or line 222 to counter 212. It should be noted that the reset information requires another one-bit section of memory in ROM 216 consequently, the data path of ROM 216 must be a minimum of 3 bits in width.

Other synchronization and control signals can be provided by ROM 216. For example, output 220 can provide a burst flag. In this case, each ROM memory location must have a storage capacity of four bits, two of which are used as described to generate the composite sync and blanking signal, and one of which resets the counter as described above, and a further one of which is used to control the instantaneous value which the burst flag is to have. In a similar manner, other control signals such as horizontal and vertical drive can be provided by providing sufficient additional memory capacity.

The above-described arrangement carries the information to generate television sync and blanking signals for any desired standard in the form of the programming of various memory locations. Change from one standard to another within a particular piece of equipment can be accomplished by changing the programming of ROM 216, or alternately by replacing the ROM with one appropriately programmed. An erasable programmable ROM (EPROM) can be reprogrammed by first erasing the unwanted current program, (such as one which can be erased by ultraviolet light) and using an appropriate programmer for imposing the desired program on the memory. Replacing ROM 216 can be easily accomplished if it is mounted in an integrated circuit socket.

The memory capacity required for the above-described arrangement is large. The memory requirements can be reduced by exploiting the cyclically redundant nature of the components making up the composite sync and blanking signals.

It will be noted that in Figure 1 the signal in the interval between times t1 and t2 is of the same shape and has the same amplitude (on a line-to-line basis) as the signal between times t3 and t4. Consequently, the signal can be generated by recurrently addressing the same ROM memory addresses. These intervals form what is hereafter called a type 1 interval. Next is the interval between times t2 and t3 which is hereafter called a type 2 interval. The sync and blanking signals during the type 2 interval are generated by addressing another portion of the ROM. The signals present during the interval between times t4 and t5 are different in amplitude and shape than those in the aforementioned intervals. The interval t4—t5 is a type 3 interval, and the sync and blanking signals produce during a type 3 interval are generated by addressing still another portion of the ROM. The last type of interval is a type 0 interval, which occurs before time t1 and after time t5, and corresponds to the main portion of the television signal during which active video is present. Yet another portion of the ROM is used to store the information relating to the amplitudes of the sync and blanking components of the composite sync signal during type 0 intervals.

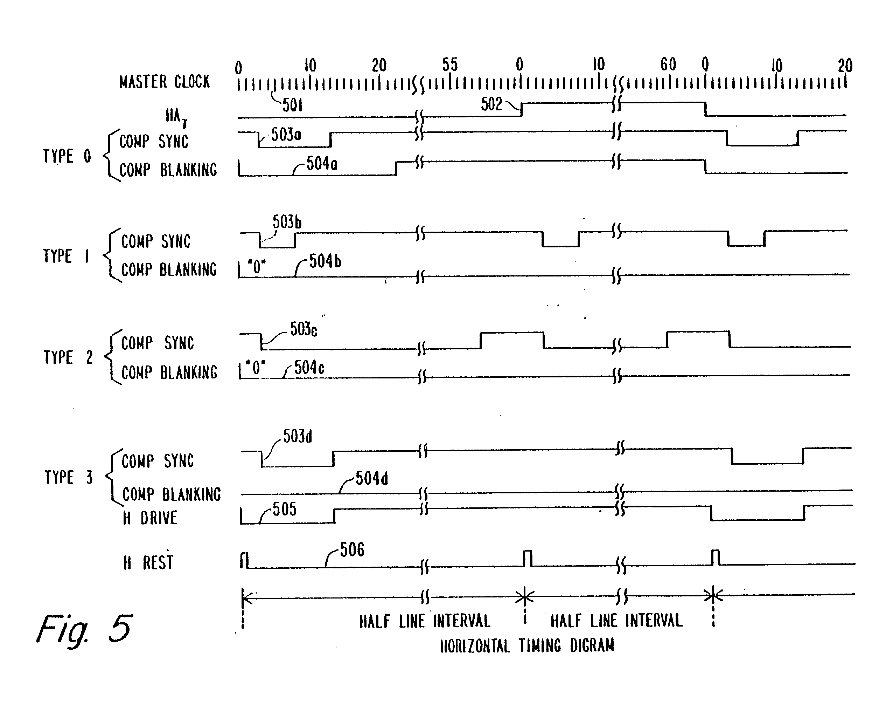

Figure 3 illustrates in block diagram form a sync generator arrangement having reduced memory as compared with the arrangement of Figure 2. The arrangement of Figure 3, designated generally as 320, accepts clock pulses at an input terminal 322 from a source (not shown) and generates at various output terminals those synchronizing and blanking signals from which a composite blanking signal is formed. The clock pulses are illustrated as 501 of Figure 5. Since sync generator 320 may operate with equipment which processes color television signals in a sampled manner, it is desirable to use a clock signal frequency which is related to the color subcarrier frequency. Often, the clock signal is at four times the subcarrier frequency (4×SC). However, inexpensive present logic circuits cannot operate dependably at this frequency, so in the embodiment shown the clock signal is at a frequency of one-seventh of 4×SC. [Other clock frequencies such as one-fifth of 4×SC may be used.] Clock signal 501 is applied to both a horizontal counter 324 and to a horizontal latch circuit 326 as illustrated in Figure 3.

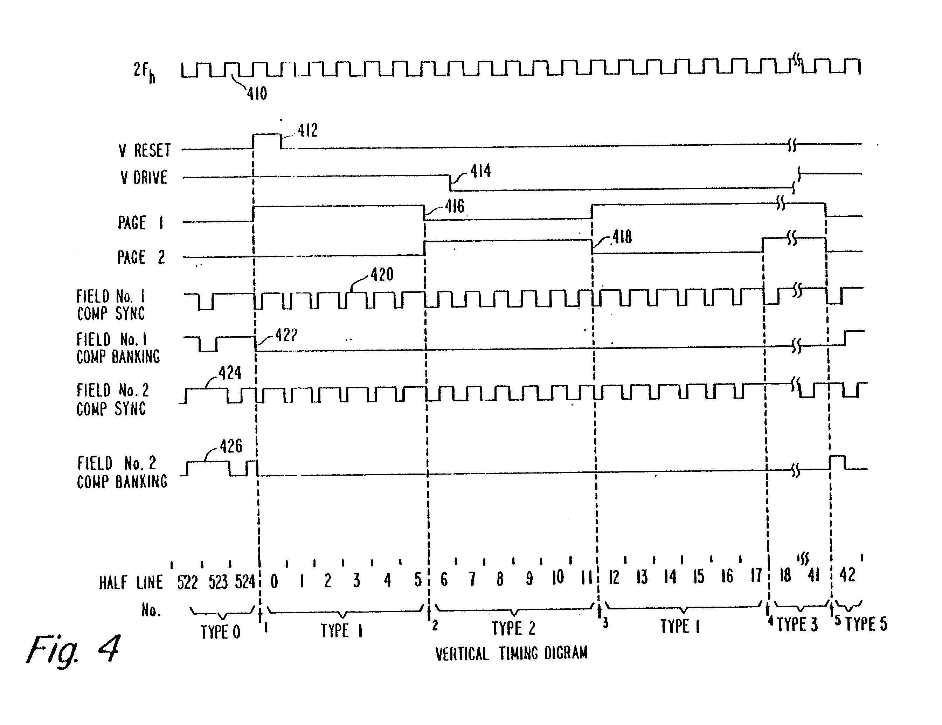

Horizontal counter 324 is a synchronous seven-bit binary counter, each of the cells or stages of which is coupled by an address line to a corresponding portion of a horizontal ROM 328. Horizontal counter 324 also produces on an output conductor 330 a signal illustrated as 410 of Figure 4 having twice the horizontal frequency. This twice-horizontal-frequency signal is produced by dividing the frequency of clock signal 501 by an appropriate factor. Counter 324 is capable of a maximum count of 128, but is reset by a signal from an appropriate memory location in ROM 328 (by way of latch 326) at the appropriate count. For a particular embodiment of the sync generator for producing a standard NTSC sync signal, the clock frequency of clock signal 501 is 2.04545 MHz and the corresponding count of counter 324 is 65.

The twice horizontal frequency signal produced on conductor 330 by dividing 2.04545 MHz by the divisor 65 is applied to a vertical counter 332, to a divide-by 2 counter 336, and to a latch circuit 334. The counter 332 has a unique state during each half-line of a field. Vertical ROM 338 decodes the unique state of the counter 332 and for each state produces an output (outputs) from the corresponding memory location. ROM 338 must have a bit width or memory capacity at each location commensurate to the application. As in the arrangement of Figure 2, one memory bit per location or address is used to generate the counter reset pulse. The reset pulse is generated when the appropriate count of counter 332 addresses the memory location of ROM 338 containing a logic 1 (for the positive-logic case), rather than the logic 0 occurring at all other prior addresses. The reset pulse is coupled from ROM 388 at output terminal 02. Other output signals of ROM 338 are the vertical drive signal, which appears at output terminal 03, and horizontal page selection signals which appear at output terminals 00 and 01 of ROM 338.

These various output signals of ROM 338 are applied to corresponding input terminals of a vertical latch circuit 334. Latch 334 acts to reclock the signals in accordance with half-line signal 410. This reclocking accommodates internal delays of counter 332 and ROM 338. In effect, the latch output signal corresponds to the ROM output signal for the preceding half-line. Vertical reset pulse 412, vertical drive pulse 414, and the horizontal page selector signals 416 and 418 as illustrated in Figure 4 are generated at output terminals L2, L3, L0 and L1 respectively, of latch 334.

Each of the cells or stages of counter 332 is coupled by one of ten address lines (VA0—VA9) to a corresponding portion of vertical ROM 338. ROM 338 decodes the addresses represented by each unique state of counter 332 as it counts the twice-horizontal frequency signal applied to the counter input. Ten-stage counter 332 is capable of a maximum count of 1024, but is reset as described by the appropriately programmed ROM according to the required standard being generated. In this particular embodiment for producing standard NTSC frame of 525 lines, counter 332 counts 525 twice-horizontal frequency pulses 410 (which have a duration of one-half horizontal line) during each field. For other standards, as for example the aforementioned 655-line standard for film compatibility, or for 625-line PAL or SECAM, counter 332 is reset during the appropriate count.

In a similar manner, counter 332 addresses ROM 338 to provide the vertical drive signal to latch 334. Latch 334 reclocks this drive signal to provide at output L3 the seven full lines duration vertical drive signal 414. Negative-going signal 414 begins between half line intervals 6 and 7 as illustrated in Figure 4 and ends between half line intervals 20 and 21 (not shown) for NTSC. Since this signal 414 changes at one-half line intervals, no information from horizontal ROM 328 is required to generate it. Consequently, vertical drive signal 414 can be derived exclusively from vertical ROM 338. This is true in the case of all the above-mentioned standards, the only difference being the occurrence of the leading and trailing edges with respect to the zero labelled half line. The width in all of these standards is the same seven full lines at NTSC.

The page signals 416 and 418 at outputs L0 and L1, respectively, are used to identify which one of the types of intervals is currently being counted or generated, and this information is applied to horizontal ROM 328 at inputs HA8 and HA9 respectively. In particular, during the type 0 intervals both page signals are low. During type 1 intervals page signal 416 is high, while page signal 418 is low. In the type 2 intervals, page signal 416 is low, and page signal 418 is high. Type 3 intervals have the both signals 416 and 418 high. If it is desired to provide other signals, e.g., color bar gating signals or white balance cursor, then it is necessary to provide more page address lines from latch 334 to ROM 328, thus dividing each field into more intervals. However, for every new page address line, the size of ROM 328 must be doubled.

A problem is encountered due to the interlace structure of the NTSC frame, which requires a one-half line offset of the composite sync and blanking signals between successive fields. This is shown by signals 420 and 422 of Figure 4 for field one as compared to signals 424 and 426 for field two. Since the counters are based on half scan line intervals, we can provide for interlace by a free running counter (one that never gets reset) such as counter 336 operating at the line frequency. This free running clock 336 is 180° out-of-phase during the same vertical count in each of two successive fields due to the odd number of half lines per field. Using the output signal 502 shown in Figure 5 of clock 336 as address signal for address line HA7 for ROM 328 permits identification of which half of the selected "type of line" it is desired to be read out of memory for that one-half line interval. The two different half line intervals determined by counter 336, when take in combination with the four types of intervals (type 0—type 3) determined by the page signals, result in a total of eight half line intervals. These eight unique half-line intervals are stored in eight corresponding pages on portions of horizontal ROM 328.

The final address lines that remain are those that originate from the horizontal counter 324. These seven address lines HA0—HA6 sequentially access the memory locations of horizontal ROM 328 and read out the stored amplitude of the timing signals from the pages of ROM memory addressed by the page signals in the time interval chosen by the master clock applied to input 332.

These timing signals are shown in Figure 5 for all eight half-line intervals. In particular, they are composite sync signals 503a, 503b, 503c, and 503d during intervals type 0 to type 3 respectively, which are present at output H00 of ROM 328. Signal 503a comprises the horizontal sync signal during active video signal, 503b is the equalizing pulses. Signal 503c comprises the vertical serrations, while signal 503d is the horizontal sync during the vertical blanking interval. Composite blanking signals 504a, 504b, 504c, and 504d are present during intervals type 0 to type 3 respectively at output H01. Signal 504a is the horizontal blanking during horizontal retrace, while signals 504b, 504c, and 504d are the blanking during the vertical blanking interval, i.e., there is blanking during the entire horizontal scan as indicated by logic "0" throughout the scan. Horizontal drive signal 505 is present during intervals type 0 to type 3 respectively at output H02 and is the same for all interval types.

A horizontal reset signal 506 is shown, which is the same for all half line intervals, and it is present at output H03. The occurrence of the pulse therein is under the control of ROM 328, and the address or addresses at which it occurs can be changed in accordance with the desired standard to be generated and the clock frequency which is desired. In addition, if for a given standard, a higher resolution or accuracy is desired, a higher frequency clock signal at input 322 is required. This, in turn, requires a different place in ROM 328 in order for reset signal 506 to occur at the same time at the beginning of every half line.

All of the above-described signals generated by ROM 328 are present at the respective ROM 328 outputs one cycle of the clock signal at 322 sooner than shown in Figure 5. They are applied to latch 326, which reclocks them in accordance with the clock signal at input 322. This is to compensate for the delays inherent in counter 324 and ROM 328. The composite sync, composite blanking, horizontal drive, and horizontal reset signals are available for any desired system application. Typically, the composite sync and composite blanking signals are coupled to a level-shifting circuit for creating the amplitude superposition necessary to form the composite sync and blanking waveform of Figure 1. This corresponds functionally to the D-to-A converter 218 of Figure 2.

Counter 324 is a seven stage counter capable of 128 counts, but in the described embodiment is reset at the occurrence of the sixty-fifth count by the horizontal reset pulse 506. This occurs twice during each horizontal line.

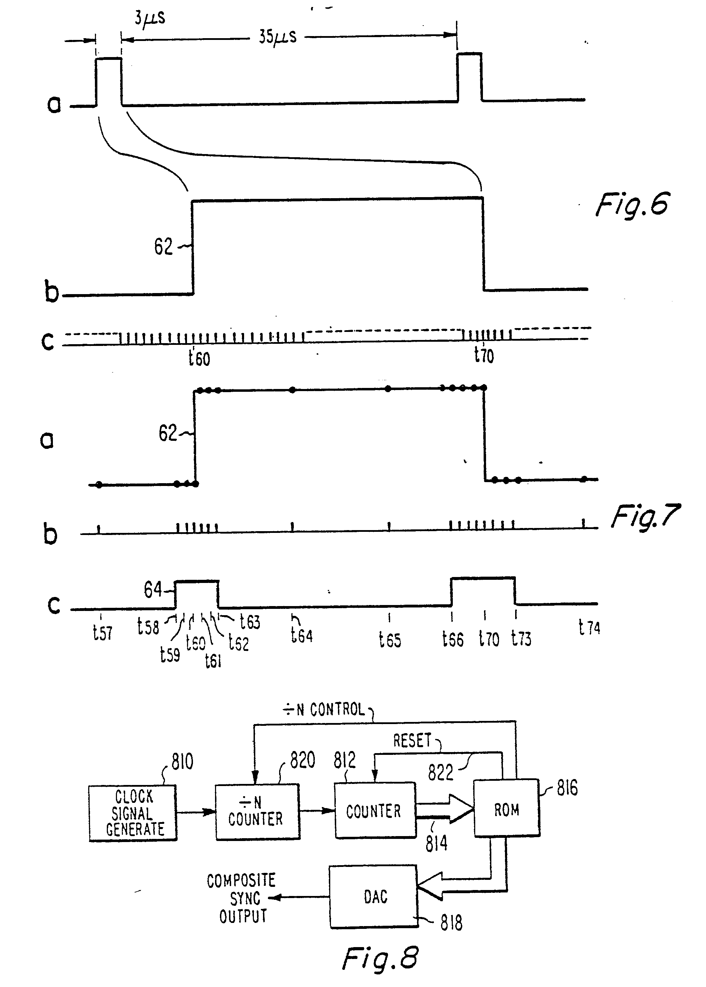

Figure 6 illustrates a part of the equalizing pulse interval. Figure 6b illustrates in expanded form one equalizing pulse 62 and Figure 6c illustrates 4×SC clock pulses to the expanded scale. In the vicinity of times t60 and t70 at which transitions take place in the pulse waveform, the clock pulses must be closely spaced to provide sufficient resolution. This may be especially true if the pulse edges are not abrupt as shown but have a finite rise-time. For the interval between t60 and t70, however, the magnitude of pulses 62 does not change. Also, after time t70 there is an interval of about 35μS in which the sync value is low. It can be seen that the regions around t60 and t70 requiring high resolution are relatively small, yet many memory locations must be provided for storing redundant information at high resolution everywhere else.

According to the further aspect of the invention, the clock rate is changed during the generation of the sync interval as shown in Figure 7. As illustrated in Figure 7b around time t60 and t70, many clock pulses are provided for high resolution. In the broad flat areas, few clock pulses are provided. This is accomplished by using an additional bit of memory at each address, preprogrammed with a logic 1 or a logic 0 in a pattern 64 as illustrated in Figure 7c. Pulse pattern 64 represents the value of the additional bit at each memory location. A logic 0 is stored in the additional bits of the memory addressed by clock pulses t57 and earlier. This represents a low clock rate. The clock rate remains low until the next clock pulse occurs at time t58. When clock pulse t58 addresses the memory, the additional bit at that location has a logic 1, representing a high clock rate. The clock responds by switching to a high rate and in quick succession addresses t59, t60, t61 and t62 address locations, all of which have a logic 1 additional bit. The clock rate remains high after pulse t62 addresses a memory location, and t63 clock pulse occurs in quick succession. The corresponding memory location at the t63 address is a logic 0, representing a low clock rate. The clock returns to the low recurrence rate, and only three clock pulses occur at the low rate in the interval t63—t66. The additional bit addressed by clock pulse t66 is a logic 1, and the clock returns to the high speed mode for the duration of the high level of pulse 64. In this way, the number of memory locations required to be addressed can be very much reduced from about 43 in the arrangement of Figure 6 to about 8 in Figure 7.

Figure 8 illustrates a simplified block diagram of a reduced memory arrangement. Figure 8 is similar to Figure 2, except that an additional controllable counter 820 is included between clock signal generator 810 and counter/decoder 812. Counter 820 is of a known type in which the level of the logic signal on its control input determines the modulus by which the fixed-rate clock pulses from generator 810 are counted to produce piecewise-periodic clock signals as illustrated in conjunction with Figure 7. Counter 820 may include for example a fixed divide-by-16 counter and a switch controlled by the control input which takes an output from the divide-by-16 counter or directly from the fixed clock.

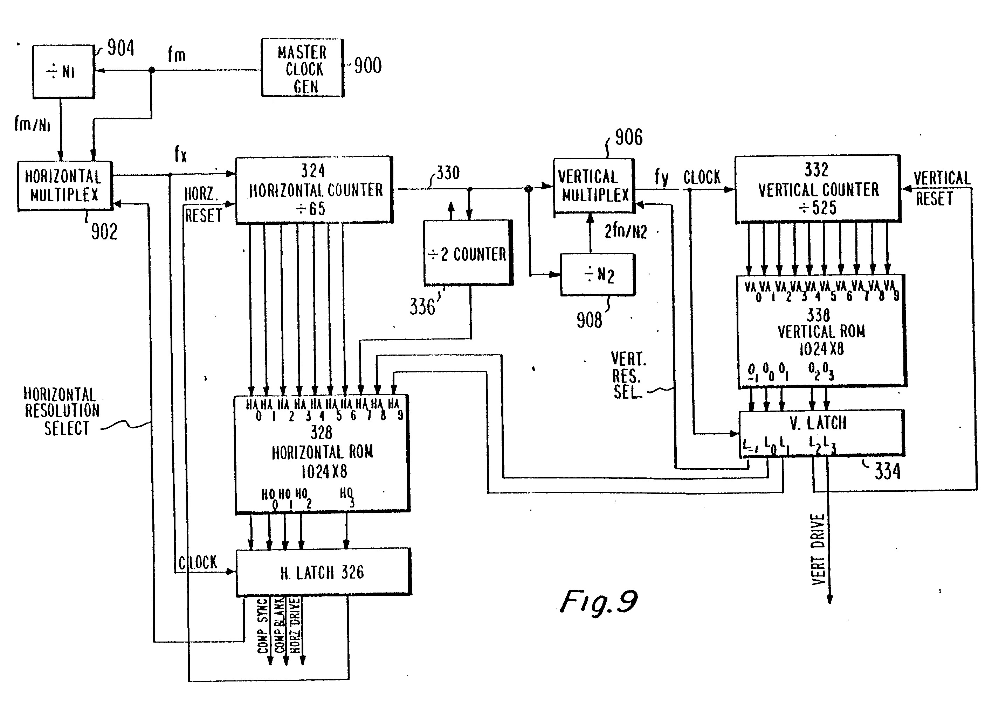

Figure 9 is a detailed block diagram of a reduced memory counter-ROM sync generator according to the invention. In this arrangement, elements corresponding to those in Figure 3 have the same reference number. In Figure 9, a master clock generator 900 produces fixed clock pulses $f_m$ which are applied to inputs of a multiplexer 902 and a divide-by-N1 counter 904. A horizontal resolution select signal taken from the additional bit in the memory and held by latch 326 is used to control the resolution as described previously on a line-to-line basis. Multiplexer 902 selects either the master clock or the divided master clock to advance horizontal counter 324. Similarly, a vertical resolution select signal is applied from vertical latch 334 to a vertical multiplexer 906 which selects either the counted-down output of horizontal counter 324 directly or the output of 324 further divided by N2 in counter 908.

The embodiment of Figure 2 was constructed using integrated circuits as follows:

| Block | Quantity | Component No. | - | Manufacturer |
|---|---|---|---|---|
| 324 | 1 | 74LS393 | | Texas instruments |
| 332 | 1 | CD4040 | | RCA Corporation |
| 336, 326, 334 | 4 each | 74LS175 | | Texas instruments |
| 328, 338 | 2 each | 2758 | | Intel |

Other embodiments of the invention will be apparent to those skilled in the art. For example, the clock pulses may be at the 4×SC rate or at any desired rate so long as logic of commensurate speed is used. Where gross change in synchronizing standard is contemplated, the number of stages in horizontal counter 324 and vertical counter 332 may be increased to accommodate large numbers of samples per line or large numbers of lines per field. Synchronizing and blanking signals other than those shown may be generated, as for example, pulses identifying particular lines in interval t4—t5 for identifying ancillary information.

Other embodiments of reduced memory aspect of the invention will also be apparent to those skilled in the art. For example, several different levels of resolution may be used in order to minimize the memory requirements, whereupon two or more additional bits would be necessary at each memory location. Rather than dividing down from a master clock generator, several clock generators at different rates might be used. The clocks can be slaved to sync or to burst in known manner. The resolution can be changed in many ways, as by having high resolution during only the entire vertical blanking interval and during each succeeding horizontal blanking interval.

## Claims

1. A television synchronizing signal generator comprising addressable memories (328, 338) addressed according to successive counting states of respective line and field counters (324, 332) and providing from their respective addresses signals corresponding to required synchronization components of a composite video signal at successive instants during and between successive lines and fields of said video signal, characterized in that the counters (324, 332) are connected in cascade, that each counter is reset (Horizontal Reset, Vertical Reset), on reaching a particular counter, by a signal provided from the then addressed location of the corresponding memory (328, 338), and that the line memory (328) is addressed not only by signals ($HA_1$—$HA_6$) from the horizontal counter (324) but also by signals ($HA_8$, $HA_9$) obtained from the field memory (338) dependent on a currently addressed field memory location.

2. A synchronizing signal generator according to claim 1 including respective latches (326, 334) coupled to the outputs of said memories (328, 338).

3. A synchronizing signal generator according to claim 1 or claim 2 wherein the field memory (338) provides at least one page address signal ($O_0$, $O_1$) to said line memory (328) as said address signals ($HA_8$, $HA_9$) thereto from the field memory.

4. A synchronizing signal generator according to claim 3 wherein two such page address signals are provided whereby four types of time intervals can be determined within the line memory (328).

5. A synchronizing signal generator according to any preceding claim including a further counter (336) coupled between the output of the line counter (324) and an address input ($HA_7$) of the line memory to determine half-line intervals.

6. A synchronizing signal generator according to any preceding claim wherein at least one of said counters (324, 332) is driven by piecewise-periodic clock pulses having different clock frequencies at different times according to the resolution desired at such different times.

7. A synchronizing signal generator according to claim 6, wherein said piecewise-periodic clock signals for the counter (324 or 332) in question are obtained from a selector (902 or 906) responsive to an output signal from the associated memory (328 or 338) to supply clock pulses to the counter either directly or via a frequency changer (904 or 980).

**Patentansprüche**

1. Fernsehsynchronsignalgenerator mit adressierbaren Speichern (328, 338), die entsprechend aufeinanderfolgenden Zählerständen jeweiliger Zeilen- und Halbbildzähler (324, 332) adressiert werden und aus ihren jeweiligen Adressen Signale liefern, die den gewünschten Synchronkomponenten eines Videosignalgemisches zu aufeinanderfolgenden Augenblicken während und zwischen aufeinanderfolgenden Zeilen und Halbbildern des Videosignals entsprechen, dadurch gekennzeichnet, daß die Zähler (324, 332) in Kaskade geschaltet sind, daß jeder Zähler bei Erreichen eines bestimmten Zählwertes durch ein Signal zurückgesetzt wird (Horizontal-Rücksetzung, Vertikal-Rücksetzung), das von dem dann adressierten Platz im entsprechenden Speicher (328, 338) geliefert wird, und daß der Zeilenspeicher (328) nicht nur durch Signale (HA$_1$—HA$_6$) vom Horizontalzähler (324) sondern auch durch Signale (HA$_8$, HA$_9$) adressiert wird, welche vom Halbbildspeicher (338) in Abhängigkeit von einem momentan adressierten Halbbildspeicherplatz geliefert werden.

2. Synchronsignalgenerator nach Anspruch 1 mit entsprechenden Verriegelungsschaltungen (326, 334), die mit den Ausgängen der Speicher (328, 338) gekoppelt sind.

3. Synchronsignalgenerator nach Anspruch 1 oder 2, bei dem der Halbbildspeicher (338) mindestens ein Seitenadressensignal (O$_0$, O$_1$) an den Zeilenspeicher (328) als die diesem vom Halbbildspeicher zugeführten Adressensignale (HA$_8$, HA$_9$) liefert.

4. Synchronsignalgenerator nach Anspruch 3, bei dem zwei derartige Seitenadressensignale geliefert werden, wobei vier Typen von Zeitintervallen innerhalb des Zeilenspeichers (328) bestimmbar sind.

5. Synchronsignalgenerator nach einem der vorstehenden Ansprüche mit einem weiteren Zähler (336), der zwischen den Ausgang des Zeilenzählers (324) und einen Adresseneingang (HA$_7$) des Zeilenspeichers zur Bestimmung von Halbzeilenintervallen gekoppelt ist.

6. Synchronsignalgenerator nach einem der vorstehenden Ansprüche, bei welchem mindestens einer der Zähler (324, 332) durch stückweise periodische Taktimpulse angesteuert wird, welche zu unterschiedlichen Zeiten unterschiedliche Taktfrequenzen entsprechend der zu diesen unterschiedlichen Zeiten gewünschten Auflösung haben.

7. Synchronsignalgenerator nach Anspruch 6, bei welchem die stückweise periodischen Taktimpulse für den betreffenden Zähler (324 oder 332) von einer Wähleinrichtung (902 oder 906) geliefert werden, die auf ein Ausgangssignal vomzugehörigen Speicher (328 oder 338) anspricht, um Taktimpulse entweder direkt oder über einen Frequenzwandler (904 oder 980) an den Zähler zu liefern.

**Revendications**

1. Générateur de signaux de synchronisation de télévision comprenant des mémoires adressables (328, 338) adressées selon des états successifs de comptage de compteurs respectifs de lignes et de trames (324, 332) et produisant, à leurs adresses respectives, des signaux correspondants aux composantes requises de synchronisation d'un signal vidéo composite en des instants successifs pendant et après des lignes et trames successives dudit signal vidéo, caractérisé en ce que les compteurs (324, 332) sont connectés en cascade, en ce que chaque compteur est remis à zéro (Remise a Zero Horizontale, Remise a Zero Verticale), lorsqu'est atteint un compte particulier, par un signal produit par l'emplacement alors adressé de la mémoire correspondante (328, 338) et que la mémoire de lignes (328) est adressée non seulement par des signaux (HA$_1$—HA$_6$) du compteur horizontal (324) mais également par des signaux (HA$_8$, HA$_9$) obtenus de la mémoire de trames (338) selon un emplacement couramment adressé de la mémoire de trames.

2. Générateur de signaux de synchronisation selon la revendication 1, comprenant des verrouillages respectifs (326, 334) couplés aux sorties desdites mémoires (328, 338).

3. Générateur de signaux de synchronisation selon la revendication 1 ou la revendication 2 où la mémoire de trames (338) applique au moins un signal d'adresse de page (O$_0$, O$_1$) à ladite mémoire de lignes (328) en tant que lesdits signaux d'adresse (HA$_8$, HA$_9$) de la mémoire de trames.

4. Générateur de signaux de synchronisation selon la revendication 3 où deux de ces signaux d'adresse de page sont produits, ainsi quatre types d'intervalles de temps peuvent être déterminés dans le mémoire de lignes (328).

5. Générateur de signaux de synchronisation selon l'une quelconque des revendications précédentes comprenant un autre compteur (336) couplé entre la sortie du compteur de lignes (324) et une entrée d'adresse (HA$_7$) de la mémoire de lignes pour déterminer des intervalles d'une demi-ligne.

6. Générateur de signaux de synchronisation selon l'une quelconque des revendications précédentes où au moins l'un desdits compteurs (324, 332) est attaqué par des impulsions d'horloge périodiques par pièce ayant des fréquences différentes d'horloge en des temps différents selon la résolution souhaitée en ces temps différents.

7. Générateur de signaux de synchronisation selon la revendication 6 où lesdits signaux périodiques d'horloge par pièce pour le compteur (324 ou 332) en question sont obtenus d'un sélecteur (902 ou 906) répondant à un signal de sortie de la mémoire associée (328 ou 338) pour appliquer des impulsions d'horloge au compteur soit directement ou par un changeur de fréquence (904 ou 980).

Fig. 1

Fig. 2

Fig. 3

**Fig. 4**

VERTICAL TIMING DIGRAM

- 2Fₕ — 410
- V RESET — 412
- V DRIVE — 414
- PAGE 1 — 416
- PAGE 2 — 418, 420
- FIELD No. 1 COMP SYNC — 422
- FIELD No. 1 COMP BANKING — 424
- FIELD No. 2 COMP SYNC
- FIELD No. 2 COMP BANKING — 426

HALF LINE No.: 522 523 524 0 1 2 3 4 5 6 7 8 9 10 11 12 13 14 15 16 17 18 41 42

TYPE 0 — TYPE 1 — TYPE 2 — TYPE 1 — TYPE 3 — TYPE 5

t₁ t₂ t₃ t₄ t₅

Fig. 5

HORIZONTAL TIMING DIGRAM

Fig.6

Fig.7

Fig.8

4

Fig.9